# EUROPEAN PATENT SPECIFICATION

(11) **EP 4 416 019 B1**
(45) Date of publication and mention of the grant of the patent: **10.09.2025**
(21) Application number: 21797971.5
(22) Date of filing: 15.10.2021
(51) Int. Cl.: B60S 1/56, B60S 1/38, B60S 1/34

(54) **IMPROVED SENSOR CLEANING BASED ON REQUIRED CLEANING INTENSITY**
VERBESSERTE SENSORREINIGUNG AUF BASIS DER ERFORDERLICHEN REINIGUNGSINTENSITÄT
NETTOYAGE DE CAPTEUR AMÉLIORÉ SUR LA BASE DE L'INTENSITÉ DE NETTOYAGE REQUISE

(43) Date of publication of application: 21.08.2024
(73) Proprietor: Kautex Textron GmbH & Co. KG, 53229 Bonn (DE)
(72) Inventor: PLANT, David, Greenville, South Carolina 29607 (US); DAVIES, Chris, Cardiff South Glamorgan CF15 8LS (GB); SIERRA, Nelly, 53225 Bonn (DE)
(74) Representative: Richly & Ritschel Patentanwälte PartG mbB
(86) International application number: PCT/EP2021/078678
(87) International publication number: WO 2023/061612

(56) References cited:
- WO-A1-2019/105722
- DE-A1- 102015 118 670
- DE-A1- 102019 212 326
- FR-A1- 3 102 123
- US-A1- 2020 094 786
- US-A1- 2020 189 524
- US-A1- 2021 114 561

## Description

The present invention refers to a sensor cleaning device for cleaning an exterior sensor surface of a sensor, in particular an optical camera or a LiDAR, for use in automotive applications, comprising
- at least one wiper element, and
- a wiper rig, which supports the at least one wiper element, and which is movable to move the at least one wiper element across the exterior sensor surface.

The present invention also refers to a sensor unit comprising a sensor, in particular an optical camera or a LiDAR, for use in automotive applications and an above sensor cleaning device.

In current vehicles, an increasing number of sensors is provided to monitor an environment around the vehicle. Such sensors include in particular optical cameras including stereo cameras, LiDAR, and other sensors like radar sensors and ultrasonic sensors.

Based on a knowledge of the environment, possible dangerous situations for the vehicle, i.e. the ego vehicle, as well as for other traffic participants, can be identified and respective warnings can be generated, or countermeasures can be started, e.g. braking the ego vehicle or taking a steering action to avoid a collision with an object ahead of the ego vehicle. This is particularly important when implementing driver assistance systems, which are e.g. known as ADAS (Advanced Driver Assistance Systems), or autonomous driving functions.

In all cases, it is required that the sensors operate continuously and correctly to provide reliable sensor information. This is likely to require a clean exterior sensor surface. The exterior sensor surface refers to a surface, which is an interface for the sensor to interact with the environment to gather the sensor information. However, in particular when referring to automotive applications, the sensors are frequently exposed to environmental conditions including rain and snow, which can be a cause for residual water droplets on the exterior sensor surface. Furthermore, solid particles can be disposed on the exterior sensor surface, e.g. dust particles, mud, splashes, smut and others. Therefore, cleaning of the exterior sensor surface has become an important issue.

In automotive applications, it is e.g. known to use a wiper for cleaning a windshield glass or headlights of the respective vehicle to remove sundries such as rain, snow, dust and the like, to improve sight for a driver or illumination of the environment of the vehicle, thereby ensuring safe driving. Such wipers comprise a wiper motor, a wiper transmission connecting rod, a wiper arm and a wiper blade.

In this context, US 2019 0361227 A1 discloses a LiDAR sensor including a housing, a window cover installed on the housing, a motor mounted in the housing, a rotating shaft rotated by the motor, a guide connected to the rotating shaft and rotated along the surface of the window cover, and a brush mounted on the guide so as to face the window cover, contacted with the window cover, and washing the surface of the window cover with rotation of the guide. The guide may include a first guide part connected to the rotating shaft, a second guide part rotatably connected to the housing, and a third guide part connected to the first and second guide parts, formed in a U-shape so as to face the window cover, and having the brush mounted thereon.

Efficient cleaning requires that the respective wiper is pushed against a surface to be cleaned. Cleaning efficiency is typically improved with a strength of pushing the wiper element against the surface to be cleaned. However, increasing strength increases friction of the wiper blade at the surface to be cleaned, which can be a cause for increased abrasion of the wiper blade, increased wiping noise, and a need for a stronger wiper motor to move the wiper element against a friction force. Abrasion reduces cleaning efficiency of the wiper over time. Reducing abrasion by reducing the strength of pushing the wiper against the surface to be cleaned typically reduces cleaning efficiency. Hence, a trade-off between the different advantages and disadvantages is required. DE-A1-10 2015 118 670 shows the preamble of claim 1.

It is an object of the present invention to provide a sensor cleaning device and a sensor unit comprising a sensor and a sensor cleaning device, which overcome at least some of the problems of the state of the Art, and which enable efficient and durable cleaning of the exterior sensor surface.

This object is achieved by the sensor cleaning device of present claim 1.

Advantageous embodiments of the sensor cleaning device are given in dependent claims 2 to 16.

In particular, the object is achieved by a sensor cleaning device for cleaning an exterior sensor surface of a sensor, in particular an optical camera or a LiDAR, for use in automotive applications, comprising
- at least one wiper element, and
- a wiper rig, which supports the at least one wiper element, and which is movable to move the at least one wiper element across the exterior sensor surface.

According to the invention, the sensor cleaning device is adjustable to adjust its cleaning intensity for cleaning the exterior sensor surface based on a required cleaning intensity for cleaning the exterior sensor surface.

The sensor cleaning device according to the invention enables an adjustment of the cleaning intensity for cleaning the exterior sensor surface based on a required cleaning intensity for cleaning the exterior sensor surface. Accordingly, the cleaning intensity can be chosen to be as low as possible to sufficiently clean the exterior sensor surface and to overcome at least some of the problems of conventional cleaning devices, which may include abrasion of the at least one wiper element, wiping sounds when moving the at least one wiper element across the exterior sensor surface. However, when required and indicated by the required cleaning intensity for cleaning the exterior sensor surface, the cleaning intensity can be increased as required, so that the drawbacks of increased cleaning intensity only apply for a limited time. Accordingly, the overall performance of the sensor cleaning devices can be improved. Furthermore, the reduced abrasion enables an extend duration of high cleaning intensity for cleaning the exterior sensor surface. It is to be noted that abrasion results in a damage of the at least one wiper element, so that the at least one wiper element shows a poorer performance. The need for a trade-off between the different advantages and disadvantages can be reduced.

The required cleaning intensity provides control information for controlling the sensor cleaning device. The required cleaning intensity can be determined by a control unit of the sensor cleaning device based on information provided to the sensor cleaning device. The control unit performs control of the components of the sensor cleaning device, in particular the wiper rig.

Alternatively, the required cleaning intensity is calculated away from the sensor cleaning device and can be provided to a control unit of the sensor cleaning device to perform control of the components of the sensor cleaning device, in particular the wiper rig. The control unit can be located apart from the sensor rig.

Further alternatively, the sensor cleaning device does not comprise a control unit and receives control commands or even analog control voltages to adjust its cleaning intensity for cleaning the exterior sensor surface. The control commands or analog control voltages are based on the required cleaning intensity for cleaning the exterior sensor surface and are directly received by respective components of the sensor cleaning device to adjust the cleaning intensity.

The sensor cleaning device can be used for cleaning exterior sensor surfaces of any kind of sensor. Due to a typically exposed placement as well as working principles of the different types of sensors, the sensor cleaning device is most beneficial for use with optical cameras or LiDARs (Light Detection And Ranging) based on light. The use in automotive applications is a typical cause for particles and droplets disposed on the exterior sensor surface.

The exterior sensor surface refers to a surface, which is an interface for the sensor to interact with the environment to gather the sensor information. In particular when referring to automotive applications, the sensors are frequently exposed to environmental conditions including rain and snow, which can be a cause for dirt and/or water droplets deposited on the exterior sensor surface and which decrease a performance of the sensor. Each sensor can have an individual exterior sensor surface. However, due to an increasing number of sensors used in state-of-the-Art vehicles, multiple sensors can be provided with a single exterior sensor surface, so that cleaning of the exterior sensor surface can increase performance of multiple sensors located behind the exterior sensor surface.

The exterior sensor surface has a size, which covers a field of view of the respective sensor or even multiple sensors. Typically, the size of the exterior sensor surface is sufficiently large to allow for some margin for positioning the at least one wiper element and/or the wiper rig when not in use. Similarly, interference with the wiper rig can be avoided with a sufficiently large exterior sensor surface.

The at least one wiper element is in contact with the exterior sensor surface to remove particles, droplets, impurities or other kinds of dirt from the exterior sensor surface.

The wiper rig provides a support for the wiper element(s). The wiper rig is movable to move the wiper element(s) across the exterior sensor surface. The wiper rig enables a relative movement of the wiper element(s) compared to the exterior sensor surface. Multiple wiper elements can be moved individually or together. The sensor cleaning device, in particular the wiper rig, can provide a support for the sensor to form the sensor unit. In another embodiment, the sensor cleaning device and the sensor are mounted individually at the vehicle. In case multiple wiper elements are provided, the wiper elements are preferably arranged in proximity to each other so that that they can be commonly moved by the wiper rig. Hence, the multiple wiper elements enable a multi-pass cleaning of the exterior sensor surface with just a single wiping movement performed by the wiper rig.

The sensor cleaning device performs the adjustment of its cleaning intensity based on the required cleaning intensity for cleaning the exterior sensor surface. Different kinds of adjustment are possible, as detailed out below. The different kinds of adjustment can be performed alone or in combination.

During operation of the sensor, sensor cleaning can interfere with continuous operation of the sensor and is preferably performed to minimize a time duration required for cleaning the exterior sensor surface.

According to a preferred embodiment, the sensor cleaning device comprises multiple wiper elements, which are supported by the wiper rig, wherein the multiple wiper elements are biased relative to each other to apply a different contact pressure against the exterior sensor surface. The multiple wiper elements enable a multi-pass cleaning of the exterior sensor surface with just a single wiping operation performed by the wiper rig, whereby different cleaning intensities are applied by the different wiper elements due to the different contact pressure. Hence, advantages of different contact pressures can be obtained at the same time. Furthermore, an extended duration of high cleaning efficiency can be achieved, since the wiper elements suffer differently from abrasion. Hence, when the wiper element applying a higher contact pressure does not provide a sufficiently high cleaning performance anymore, e.g. due to abrasion, the other wiper element(s) has/have not yet suffered from abrasion to the same extent and is/are supposed to clean the exterior sensor surface with high efficiency. Preferably, the contact pressure of the multiple wiper elements can be adjusted commonly by the wiper rig, so that also after failure of a first or multiple wiper element(s) the remaining wiper element(s) can maintain a desired cleaning efficiency similar to the cleaning efficiency before failure of the first or multiple wiper element(s). The biasing can be achieved in different ways, for example by providing multiple wiper elements, which are supported by the wiper rig at the same distance to the exterior sensor surface but have a different rigidity and thereby apply different contact pressures against the exterior sensor surface. Another way to realize the biasing comprises providing multiple wiper elements, which are supported by the wiper rig at different distances to the exterior sensor surface and which have the same rigidity and thereby apply different contact pressures against the exterior sensor surface. Also, combinations of the afore-mentioned configurations can be applied to realize the biasing. In case of wiper blades, the wiper blades can have the same or different configuration. In case of wiper brushes, the wiper brushes can have different numbers of bristles and/or a different arrangement of bristles and/or bristles having different configurations, e.g. bristles with different length, rigidity, diameter, or others.

According to the invention, the sensor cleaning device comprises positioning means for positioning the at least one wiper element relative to the exterior sensor surface based on a required cleaning intensity for cleaning the exterior sensor surface. Hence, a distance between the exterior sensor surface and the at least one wiper element can be modified in order to modify the cleaning intensity. The positioning means therefore enable a movement of the at least one wiper element in a direction of a z-axis perpendicular to the exterior sensor surface. Typically, the at least one wiper element is in permanent contact with the exterior sensor surface, and a contact pressure of the at least one wiper element against the exterior sensor surface can be adjusted using the positioning means. In case e.g. of a wiper blade as wiper element, this results in a different deformation of the wiper blade at the exterior sensor surface. In particular, the wiper rig can comprise the positioning means. Alternatively, the positioning means can be provided to move the wiper rig entirely in order to position the at least one wiper element relative to the exterior sensor surface.

According to the invention, the sensor cleaning device comprises multiple wiper elements, and
- the sensor cleaning device comprises multiple positioning means for individually positioning each wiper element relative to the exterior sensor surface based on a required cleaning intensity for cleaning the exterior sensor surface, and/or
- the sensor cleaning device comprises positioning means for commonly positioning the wiper elements relative to the exterior sensor surface based on a required cleaning intensity for cleaning the exterior sensor surface and the wiper rig comprises adjusting means for adjusting the position of the wiper elements relative to the exterior sensor surface and relative to each other based on the required cleaning intensity for cleaning the exterior sensor surface.

In both cases, an individual pressure control of a contact pressure of each of the wiper elements is achieved to accurately control the cleaning intensity. In general, the multiple wiper elements can be of the same type, e.g. multiple wiper blades or multiple wiper brushes. In this case, it is preferred, that the multiple wiper elements of the same type have different characteristics, e.g. wiper blades with different elasticity. In case the multiple wiper elements of the same type have similar characteristics, one wiper element can substitute another wiper element e.g. in case it has reached its end of life. However, also multiple wiper elements of the different types with the same or different characteristics can be provided. The individual control is in particular suitable when different wiper elements are combined, and advantage can be taken of different characteristics of each of the different wiper elements.

According to a preferred embodiment,
- the sensor cleaning device is controlled to position the at least one wiper element relative to the exterior sensor surface via the positioning means and/or the adjusting means differently for different wiping directions, and/or
- the sensor cleaning device controls the positioning means and/or the adjusting means to position the at least one wiper element relative to the exterior sensor surface differently for different wiping directions, and/or
- the sensor cleaning device comprises mechanical coupling means for automatically positioning the at least one wiper element relative to the exterior sensor surface differently for different wiping directions.

In particular, when using a wiper blade as wiper element and depending on a particular position (z-position) of the wiper blade relative to the exterior sensor surface, the wiper blade will be bent or deformed up to a certain extent. However, this bending or deformation occurs only to one lateral side of the wiper blade, so that the wiper blade is "pulled" behind in one wiping direction and pushed in the other wiping direction. Pushing has proven less efficient. Therefore, it is preferred that the pushing is performed with a reduced contact pressure based on a respective position of the wiper element for this wiping direction. The different positions of the at least one wiper element can also be chosen e.g. to apply an increased cleaning intensity when moving in a direction vertically downwards, when the removed dirt automatically falls downwards and away from the at least one wiper element, which is not the case when moving the at least one wiper element in a vertically upward direction. The sensor cleaning device can comprise an electrical driving unit, i.e. an electrically driven motor, which can move the positioning means and/or the adjusting means to position the at least one wiper element relative to the exterior sensor surface differently for different wiping directions.

According to a preferred embodiment, the positioning means are further adapted to move the at least one wiper element between its operating position for cleaning the exterior sensor surface and a maintenance position, in which the at least one wiper element is positioned away from the exterior sensor surface. Hence, the operating position and the maintenance position distinguish in a z-direction perpendicular to the exterior sensor surface. The operating position comprises the position(s) of the at least one wiper element in contact with the exterior sensor surface, so that the sensor surface can be cleaned. In the maintenance position, the at least one wiper element is not in contact with the exterior sensor surface. Hence, a movement of the wiper rig will not result in a cleaning operation of the exterior sensor surface. In particular, the maintenance position enables exchange of the at least one wiper element.

According to a preferred embodiment, the wiper rig movably supports the at least one wiper element in its operating position, in particular movably in a direction perpendicular to the exterior sensor surface, and the wiper rig comprises biasing means, in particular at least one spring, which bias the at least one wiper element towards the operating position. The biasing means can comprise one or more spring elements or elastically deformable elements. The movable supports of the at least one wiper element facilitates a movement of the at least one wiper element over the exterior sensor surface, in particular in case major amounts of dirt are deposited thereon. Hence, the biasing refers to a movement in the z-direction perpendicular to the exterior sensor surface.

According to a preferred embodiment, the at least one wiper element is provided as a wiper blade and/or the at least one wiper element is provided as a wiper brush. Wiper blades have proven efficient cleaning for e.g. liquid droplets or wet/humid dirt. Wiper brushes have proven efficient cleaning for e.g. dust. Wiper brushes are in general less prone to abrasion. Multiple wiper element with of the same or a different kind can be combined in any suitable way. Wiper elements of the same kind can have different configurations, e.g. wiper blades with different length, rigidity, structure, or other. A single wiper blade can have one or more wiper lips. Similarly, wiper brushes can have different numbers of bristles and/or a different arrangement of bristles and/or bristles having different configurations, e.g. bristles with different length, rigidity, diameter, or others.

According to a preferred embodiment, the sensor cleaning device comprises a cleaning liquid dispensing unit for dispensing a cleaning liquid for adjusting its cleaning intensity for cleaning the exterior sensor surface based on a required cleaning intensity for cleaning the exterior sensor surface. Humidity has proven beneficial for increasing cleaning efficiency, in particular when dirt strongly sticks to the exterior sensor surface. Hence, dispense of cleaning liquid can facilitate removal of dirt. Preferably, water is used as cleaning liquid. One or more cleaning liquid outlet(s) of the cleaning liquid dispensing unit can be provided. For example, the cleaning liquid dispensing unit can be provided with its cleaning liquid outlet(s) mounted at the wiper rig and/or at the at least one wiper element. The cleaning liquid outlet(s) is/are preferably mounted in proximity to the at least one wiper element. The cleaning liquid outlet(s) is/are preferably provided as nozzle(s) to release the cleaning liquid with increased pressure from the cleaning liquid dispensing unit. Further preferred, the cleaning liquid dispensing unit can dispense the cleaning liquid directly onto the exterior sensor surface. Further preferred, the cleaning liquid dispensing unit is provided to dispense the cleaning liquid in a movement direction of the at least one wiper element ahead of the at least one wiper element. Hence, the exterior sensor surface is wet before the at least one wiper element passes, so that an efficient wet cleaning of the exterior sensor surface can be achieved. Additionally or alternatively, the dispensed cleaning liquid is at least partially directed towards the at least on wiper element. Hence, the cleaning liquid can clean the at least one wiper element to avoid deposition of dirt from the at least on wiper element to the exterior sensor surface. Even when the cleaning liquid is dispensed in a direction towards the at least on wiper element, the wiper element can form a wave of cleaning liquid in movement direction ahead of itself to wet the exterior sensor surface before passing over, so that an efficient wet cleaning of the exterior sensor surface can be achieved together with the cleaning of the at least one wiper element.

According to a preferred embodiment, the sensor cleaning device comprises an air discharge unit for discharging compressed air for adjusting its cleaning intensity for cleaning the exterior sensor surface based on a required cleaning intensity for cleaning the exterior sensor surface. The discharge of the air can remove dirt particles from the exterior sensor surface and additionally dry the exterior sensor surface. The air discharge unit can be provided with one or more air nozzle(s). For example, the air discharge unit can be provided with its air nozzle(s) mounted at the wiper rig and/or at the at least one wiper element. The one or more air nozzle(s) is/are preferably mounted in proximity to the at least one wiper element. Further preferred, the air discharge unit discharges the air directly towards the exterior sensor surface. Further preferred, the air discharge unit is provided to discharge the air in a movement direction of the at least one wiper element ahead of the at least one wiper element. Hence, dirt can already be removed from the exterior sensor surface before the at least one wiper element passes, so that an efficient cleaning of the exterior sensor surface can be achieved. Additionally or alternatively, the air discharge unit can direct the discharged air at least partially towards the at least on wiper element. Hence, the compressed air can clean the at least one wiper element to avoid deposition of dirt from the at least on wiper element to the exterior sensor surface.

According to a preferred embodiment, the wiper rig is adapted for performing an axial movement to move the at least one wiper element across the exterior sensor surface, in particular to move the at least one wiper element in parallel to a border of the exterior sensor surface. The axial movement is a movement along a straight axis, which can be easily realized with the wiper rig. The axial movement enables a reliable and uniform cleaning of the entire exterior sensor surface. In addition, the wiping speed is the same for all areas of the at least one wiper element. Preferably, the at least one wiper element is held at both ends by the wiper rig, so that a uniform contact pressure can be applied from the at least one wiper element against the exterior sensor surface. For example, the wiper rig can have two arms movable in parallel along two opposite sides of the exterior sensor surface to realize the axial movement of the at least one wiper element.

According to a preferred embodiment
- the wiper rig supports the at least one wiper element in a horizontal direction and moves the at least one wiper element in a vertical direction across the exterior sensor surface, or
- the wiper rig supports the at least one wiper element in a vertical direction and moves the at least one wiper element in a horizontal direction across the exterior sensor surface.

The horizontal and vertical position refers to directions of the wiper element when mounted at the vehicle. With the at least one wiper element supported in the vertical direction and moving in the horizontal direction, dirt cannot e.g. above the wiper element and will fall vertically downwards with help from gravity. This allows a faster and more efficient cleaning. With the at least one wiper element supported in the horizontal direction and moving in the vertical direction, gravity can be used for facilitating a downward movement of the at least one wiper element.

According to a preferred embodiment, the sensor cleaning device comprises a control unit, which determines the required cleaning intensity for cleaning the exterior sensor surface based on at least one parameter out of
- an amount or level of dirt located at the exterior sensor surface,
- a type of dirt located at the exterior sensor surface,
- a location of dirt at the exterior sensor surface,
- a duration the dirt remaining at the exterior sensor surface,
- an ambient temperature,
- a vehicle speed,
- a cleaning liquid availability and/or
- data of previous cleaning operations.

The at least one parameter can be processed by a control unit of the sensor cleaning device or a separate control unit. The required cleaning intensity can be determined by a control unit based on just one of the above parameters or based on a combination of multiple parameters. The amount, type and position of dirt can be determined based on e.g. sensor information of the respective sensor. E.g. for the camera, pixels which do not change over time can be based on dirt located at the exterior sensor surface. Another approach can comprise e.g. an additional sensor for detecting dirt, e.g. based on light laterally introduced into the exterior sensor surface. The duration the dirt remaining at the exterior sensor surface can be determined based on a continuous monitoring of dirt. Furthermore, it can be assumed that dirt sticking to the exterior sensor surface when starting the vehicle already remains there for a long time. A high ambient temperature can dry the dirt, so that it will stick to the exterior sensor surface. The vehicle speed can imply different impact velocities of the dirt resulting in the dirt sticking stronger to the exterior sensor surface or not. In case of liquid drops located at the exterior sensor surface, this can indicate that no wiping is required at high velocity of the vehicle, since wind will wash away the water droplets. The cleaning liquid availability can help to plan cleaning of the exterior sensor surface, e.g. by reducing cleaning liquid usage in case of low availability. The data of previous cleaning operations can indicate e.g. if the required cleaning intensity has to be (further) increased e.g. in a previous cleaning operation, i.e. wiping, was not successful to remove the dirt. Hence, additionally to the wiping of the at least one wiping element, cleaning liquid can be additionally dispensed. It is further possible to position the at least one wiper element relative to the exterior sensor surface to exert an increased contact pressure. The contact pressure can be increased in multiple iterations.

The control unit determines the required cleaning intensity and performs control of the components of the sensor cleaning device, in particular the wiper rig, to adjust its cleaning intensity. Alternatively, the control unit receives information and processes this information for determining the above parameter(s). The information can comprise any kind of sensor information of the sensor or of any other sensor, e.g. a sensor for detecting dirt at the exterior sensor surface.

According to a preferred embodiment, the sensor cleaning device is adjustable to adjust its cleaning intensity for cleaning the exterior sensor surface based on a required cleaning intensity for cleaning the exterior sensor surface based on a location of dirt at the exterior sensor surface. When the location of the dirt on the exterior sensor surface is known, the cleaning intensity can be increased locally for this particular location. For example, cleaning liquid can be dispensed at the location of the dirt, e.g. by operating the liquid dispensing device just before the at least one wiper element reaches the location of dirt. Alternatively or additionally, a contact pressure of the at least one wiper element can be increased when the at least one wiper element reaches the location of the dirt.

According to a preferred embodiment
- the wiper rig comprises a gear drive mechanism for moving the at least one wiper element across the exterior sensor surface, and/or
- the wiper rig comprises a guide rail and a slide element for moving the at least one wiper element across the exterior sensor surface.

Preferably, the gear drive mechanism and/or the guide rail and the slide element are provided integrally with the positioning means for positioning the at least one wiper element relative to the exterior sensor surface based on a required cleaning intensity for cleaning the exterior sensor surface. Preferably, an electrical motor is provided for driving the at least one wiper element in either case.

According to a preferred embodiment
- the sensor cleaning device is adjustable to adjust its cleaning intensity for cleaning the exterior sensor surface based on a required cleaning intensity for cleaning the exterior sensor surface by adjusting a wiping frequency, and/or
- the sensor cleaning device is adjustable to adjust its cleaning intensity for cleaning the exterior sensor surface based on a required cleaning intensity for cleaning the exterior sensor surface by adjusting a wiping velocity, and/or
- the sensor cleaning device is adjustable to adjust its cleaning intensity for cleaning the exterior sensor surface based on a required cleaning intensity for cleaning the exterior sensor surface by adjusting a wiping interval length.

Adjustment of the wiping frequency, the wiping velocity and or the wiping interval length refers to adjustment or further cleaning parameters, which can improve cleaning efficiency. These cleaning parameters can be adjusted alone or in combination based on the required cleaning intensity.

According to a preferred embodiment,
- the sensor cleaning device is adjustable to adjust its cleaning intensity for cleaning the exterior sensor surface based on a required cleaning intensity for cleaning the exterior sensor surface by moving the multiple wiper elements individually or in groups between a cleaning position, in which the respective wiper element(s) is/are movable across the exterior sensor surface, and a retracted position, in which the respective wiper element(s) is/are not in contact with the exterior sensor surface.

The cleaning position corresponds to the aforementioned operating position. The movement of the wiper elements between the cleaning position and the retracted position enables an individual use of each of the wiper elements alone or in any combination in accordance with the required cleaning intensity. Hence, the required cleaning intensity can be achieved by a suitable choice of wiper elements for wiping the exterior sensor surface. This further improves cleaning efficiency of the sensor cleaning device and reduces a risk of smearing.

The object is also achieved by the sensor unit of present claim 16.

In particular, the object is achieved by a sensor unit comprising a sensor with an exterior sensor surface, in particular an optical camera or a LiDAR, for use in automotive applications and an above described sensor cleaning device.

The sensor unit is formed by a combination of the sensor and the above sensor cleaning device. The sensor unit can be provided as integral device, which can be mounted to the vehicle in a single mounting step.

The features, detailed embodiments and advantages described in respect to the sensor unit can be applied directly to the sensor cleaning device and vice versa.

These and other aspects of the invention will be apparent from and elucidated with reference to the embodiments described hereinafter. Individual features disclosed in the embodiments can constitute alone or in combination an aspect of the present invention. Features of the different embodiments can be carried over from one embodiment to another embodiment.

In the drawings:
- Figure 1:: shows a schematic view of a sensor unit with a sensor and a sensor cleaning device according to a first, preferred embodiment;
- Figure 2:: shows a schematic view of a sensor unit with a sensor and a sensor cleaning device according to a second embodiment;
- Figure 3:: shows a schematic view of a sensor unit with a sensor and a sensor cleaning device according to a third embodiment;
- Figure 4:: shows a schematic view of a sensor unit with a sensor and a sensor cleaning device according to a fourth embodiment;
- Figure 5:: shows a diagram indicating a general cleaning efficiency of a sensor cleaning device depending on a kind of dirt deposited on an exterior sensor surface of the sensor and a contact pressure indicated as wiper interference; and
- Figure 6:: shows a diagram indicating a general cleaning efficiency of a sensor cleaning device depending on an amount of cleaning liquid dispensing onto the exterior sensor surface of the sensor and a contact pressure indicated as wiper interference.

In the following description of embodiments, like features or components are referred to by the same reference numerals. A description of a component made in respect to one of the figures also applies to other figures in order to avoid a repeated description thereof. Furthermore, individual features described in respect to one embodiment can be embodied separately in other embodiments. Similarly, features described with respect to a method can be applied to a respective apparatus and vice versa.

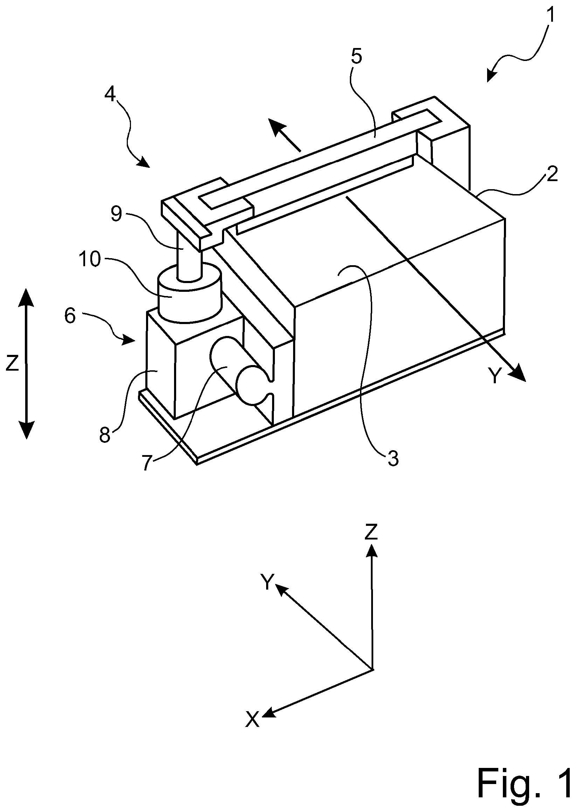

Figure 1 shows a sensor unit 1 according to a first, preferred embodiment.

The sensor unit 1 comprises a sensor 2 with an exterior sensor surface 3, in particular an optical camera or a LiDAR, for use in automotive applications.

The sensor unit 1 further comprises a sensor cleaning device 4. As can be seen in figure 1, the sensor cleaning device 4 comprises a wiper element 5 and a wiper rig 6, which supports the wiper element 5. According to the first embodiment, the sensor cleaning device 4 comprises a wiper blade as wiper element 5.

The wiper rig 6 is movable to move the wiper element 5 across the exterior sensor surface 3 of the sensor 2. The wiper element 5 is in contact with the exterior sensor surface 3 during this movement and cleans the exterior sensor surface 3 when moved by the wiper rig 6.

The exterior sensor surface 3 refers to a surface, which is an interface for the sensor 2 to interact with the environment to gather the sensor information. In this embodiment, the exterior sensor surface 3 is integral part of the sensor 2. In an alternative embodiment, multiple sensors 2 are provided with a single exterior sensor surface 3. The exterior sensor surface 3 has a size, which is bigger than a field of view of the sensor 2 at the location of the exterior sensor surface 3. The size of the exterior sensor surface 3 is sufficiently large to allow for some margin for positioning the at least one wiper element 5 and the wiper rig 6 when not in use without blocking the field of view.

In order to move the wiper blade 5, the wiper rig 6 comprises two guide rails 7 and two slide elements 8. The guide rails 7 extend along two lateral sides of the sensor 2 in y-direction, as indicated in figure 1. The slide elements 8 are moveable on the guide rails 7 in y-direction. Hence, the wiper rig 6 itself performs an axial movement to move the wiper element 5 across the exterior sensor surface 3 and in parallel to lateral borders of the exterior sensor surface 3.

As can be further seen in figure 1, the wiper rig 6 comprises two shafts 9, one of which extends from each slide element 8 upwards in z-direction, as indicated in figure 1. The wiper element 5 is held between upper end sections of the shafts 9, so that the wiper element 5 extends in x-direction, as indicated in figure 1. Although not visible in figure 1, the wiper rig 6 movably supports the wiper element 5 in its operating position, which can be seen in figure 1 with the wiper element 5 in contact with the exterior sensor surface 3. In detail, the wiper element 5 is movable in a direction perpendicular to the exterior sensor surface 3, which is the z-direction as indicated in figure 1. Additionally, the wiper rig 6 comprises biasing means, which bias the wiper element 5 towards the operating position against the exterior sensor surface 3. The biasing means comprise spring elements to bias the wiper element 5 towards its operating position.

The sensor cleaning device 4 further comprises positioning means 10 for positioning the wiper element 5 relative to the exterior sensor surface 3. The positioning means 10 are part of the wiper rig 6 and are mounted on top of the slide elements 8. The positioning means 10 perform a movement of the shafts 9 in z-direction in order to displace the wiper element 5 also in z-direction relative to the exterior sensor surface 3. Hence, a contact pressure of the wiper element 5 against the exterior sensor surface 3 can be adjusted. The positioning means 10 realize an adjustment, which is superior to the biasing of the wiper element 5 towards its operating position.

The adjustment of the position of the wiper element 5 adjusts a cleaning intensity of the sensor cleaning device 4. The adjustment is based on a required cleaning intensity for cleaning the exterior sensor surface 3.

In this embodiment, the adjustment of the cleaning intensity is performed based one or more parameters out of
- an amount or level of dirt 11 located at the exterior sensor surface,
- a type of dirt located at the exterior sensor surface 3,
- a location of dirt at the exterior sensor surface 3,
- a duration the dirt 11 remaining at the exterior sensor surface 3,
- an ambient temperature,
- a vehicle speed,
- a cleaning liquid availability and/or
- data of previous cleaning operations.

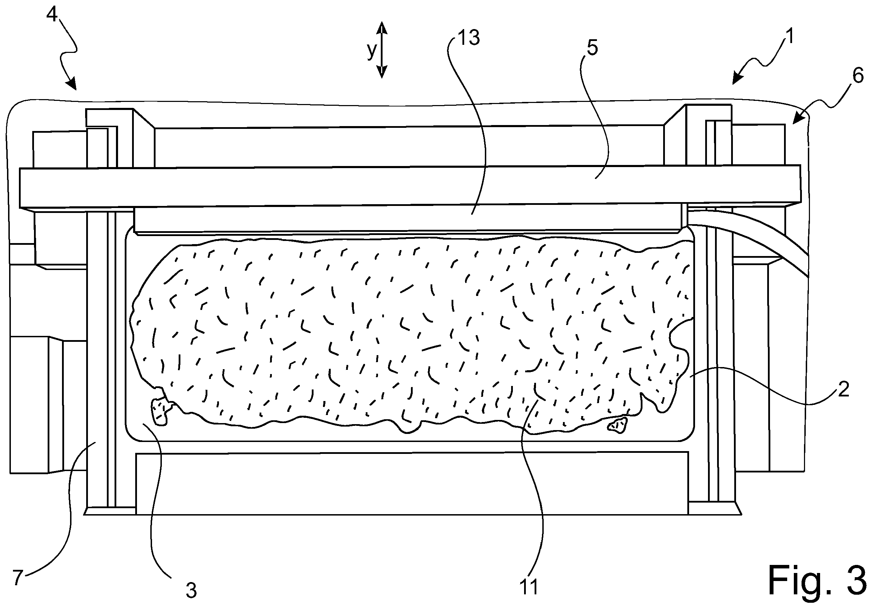

The parameters are processed to determine the required cleaning intensity, which is then used as basis for determining an optimized position of the wiper element 5 relative to the exterior sensor surface 3. Hence, in this embodiment, the parameter of cleaning liquid availability is not considered. The determined position is applied to the wiper element 5 with the positioning means 10. The required cleaning intensity is determined according to the first embodiment away from the sensor cleaning device 4 or by a control unit of the sensor cleaning device 4. The dirt 11 is depicted by way of example in figure 3, which is similarly applicable to the sensor unit 1 of the first embodiment.

Furthermore, based on a location of the dirt 11 at the exterior sensor surface 3, the control unit determines for each position of the wiper element 5 along its movement direction, i.e. y-direction, an individual required cleaning intensity for cleaning the exterior sensor surface 3. Hence, the contact pressure of the wiper element 5 against the exterior sensor surface 3 is increased when the wiper element 5 reaches the location of the dirt 11, and decreased otherwise, while the wiper element 5 is being moved by the wiper rig 6 over the exterior sensor surface 3.

The positioning means 10 are further adapted to move the wiper element 5 between its operating position for cleaning the exterior sensor surface 3 and a maintenance position, in which the wiper element 5 is positioned away from the exterior sensor surface 3. This movement is preferably performed when the wiper element 5 not being moved by the wiper rig 6 over the exterior sensor surface 3. Hence, the operating position and the maintenance position distinguish in z-direction perpendicular to the exterior sensor surface 3, as indicated in figure 1. The operating position comprises the position(s) of the wiper element 5 in contact with the exterior sensor surface 3, so that the sensor surface 3 can be cleaned. In the maintenance position, the wiper element 5 is not in contact with the exterior sensor surface 3. The maintenance position enables exchange of the wiper element 5.

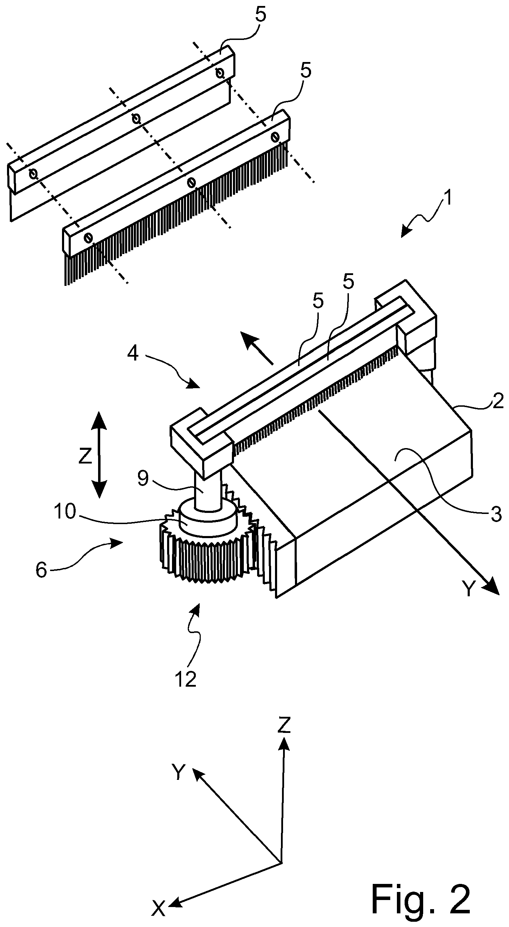

Figure 2 shows a sensor unit 1 according to a second embodiment. The sensor unit 1 of the second embodiment is similar to the sensor unit 1 of the first embodiment as described above. Hence, the description of the sensor unit 1 of the second embodiment focuses on differences between the sensor units 1 of the first and second embodiment.

The sensor unit 1 of the second embodiment comprises a sensor 2 with an exterior sensor surface 3 and a sensor cleaning device 4. As can be seen in figure 2, the sensor cleaning device 4 comprises two wiper elements 5, which are commonly supported by a single wiper rig 6. As indicated in figure 2, the sensor cleaning device 4 comprises as wiper elements 5 one wiper blade and one wiper brush.

As further difference compared to the sensor cleaning device 4 of the first embodiment, the sensor cleaning device 4 of the second embodiment comprises a gear drive mechanism 12 for moving the wiper elements 5 across the exterior sensor surface 3. According to the second embodiment, the gear drive mechanism 12 is provided integrally with the positioning means 10 for positioning the wiper elements 5 relative to the exterior sensor surface 3 based on a required cleaning intensity for cleaning the exterior sensor surface 3.

With the two wiper elements 5, the positioning means 10 adjust the position of both wiper elements 5 together.

Figure 3 shows a sensor unit 1 according to a third embodiment. The sensor unit 1 of the third embodiment is similar to the sensor unit 1 of the first embodiment as described above. Hence, the description of the sensor unit 1 of the third embodiment focuses on differences between the sensor units 1 of the first and third embodiment.

Also, the sensor unit 1 of the third embodiment comprises a sensor 2 with an exterior sensor surface 3, in particular an optical camera or a LiDAR, for use in automotive applications.

The sensor unit 1 further comprises a sensor cleaning device 4. As can be seen in figure 1, the sensor cleaning device 4 comprises a wiper element 5 and a wiper rig 6, which supports the wiper element 5. According to the first embodiment, the sensor cleaning device 4 comprises a wiper blade as wiper element 5. Structure and function of the sensor cleaning device 4 of the third embodiment are essentially identical to those of the sensor cleaning device 4 of the first embodiment, although not shown in figure 3 in detail.

The sensor unit 1 of the third embodiment is shown in figure 3 in its vertical mounting position when mounted at a vehicle with the exterior sensor surface 3 extending vertically. Consequently, the wiper element 5 extends in a horizontal direction, which is x-direction according to the third embodiment, and moves the wiper element 5 in a vertical direction, i.e. y-direction, across the exterior sensor surface 3.

As can be further seen in figure 3, the sensor cleaning device 4 comprises a cleaning liquid dispensing unit 13 for dispensing a cleaning liquid for adjusting its cleaning intensity for cleaning the exterior sensor surface 3 based on the required cleaning intensity for cleaning the exterior sensor surface 3. In this embodiment, water is used as cleaning liquid. Multiple cleaning liquid outlet(s) of the cleaning liquid dispensing unit 13 are provided, which cannot be seen in figure 3. In detail, the cleaning liquid dispensing unit 13 is mounted in parallel to the wiper element 5 and attached to the wiper element 5 or a mounting structure of the wiper rig 6 for mounting the wiper element 5.

The cleaning liquid outlets are provided as nozzles to release the cleaning liquid with increased pressure from the cleaning liquid dispensing unit 13. The nozzles are mounted in proximity to the wiper element 5 and dispense the cleaning liquid directly onto the exterior sensor surface 3 in a movement direction of the wiper element 5 ahead of the wiper element 5. Additionally, some of the nozzles direct the dispensed cleaning liquid towards the wiper element 5 to clean the wiper element 5.

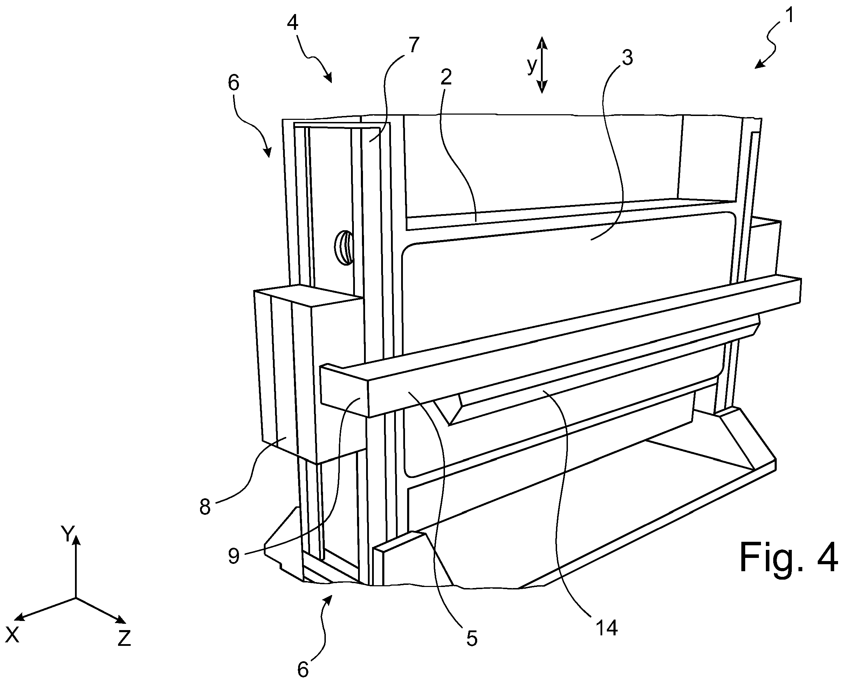

Figure 4 shows a sensor unit 1 according to a fourth embodiment. The sensor unit 1 of the fourth embodiment is almost identical to the sensor unit 1 of the third embodiment as described above. Hence, the description of the sensor unit 1 of the fourth embodiment focuses on differences between the sensor units 1 of the fourth and third embodiment.

The essential difference between the sensor units 1 of the third and fourth embodiment is that, instead of the cleaning liquid dispensing unit 13 of the third embodiment, the sensor unit 1 of the fourth embodiment comprises an air discharge unit 14 for discharging compressed air for adjusting its cleaning intensity for cleaning the exterior sensor surface 3 based on a required cleaning intensity for cleaning the exterior sensor surface 3. The air discharge unit 14 is provided with multiple air nozzles, which cannot be seen in figure 4.

The air discharge unit 14 discharges the air directly towards the exterior sensor surface 3 in a movement direction of the wiper element 5 ahead of the wiper element 5 via some of its air nozzles. Additionally, the air discharge unit 14 discharges air partially towards the wiper element 5 via some of its air nozzles.

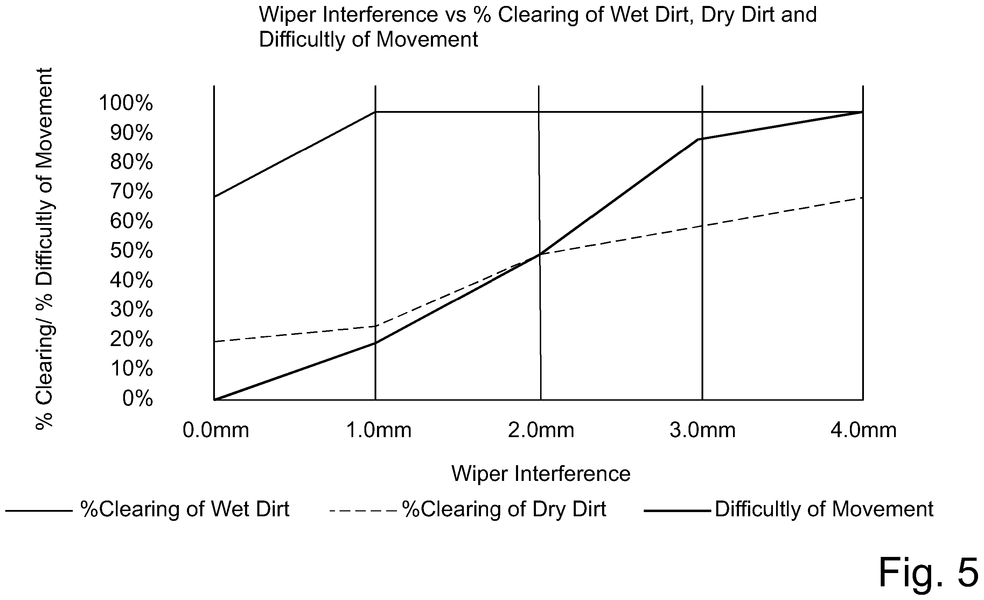

Figure 5 indicates some effects of adjusting the cleaning intensity for cleaning the exterior sensor surface 3 based on the required cleaning intensity for cleaning the exterior sensor surface 3. The diagram of figure 5 shows a cleaning efficiency, referred to in figure 5 as "% Cleaning" for different contact pressures of the wiper element 5 against the exterior sensor surface 3. The different contact pressures result from a different positioning of the wiper element 5, which is indicated in figure 5 as "wiper interference" in millimeters, i.e. the wiper element is adjusted up to 4 millimeters. The diagram contains two curves for comparing the cleaning efficiency of the sensor cleaning device for wet dirt 11 and for dry dirt 11. A third curve indicates friction of the wiper element 5 at the exterior sensor surface 3, which is referred to as "difficulty of movement" in figure 5.

As can be seen in figure 5, cleaning efficiency and friction increase with an increasing contact pressure. Furthermore, the cleaning efficiency differs for dry and wet dirt 11. The highest efficiency is achieved when cleaning wet dirt 11 with a highest contact pressure. Based on figure 5, the cleaning intensity for cleaning the exterior sensor surface 3 can be increased/decreased based on a required cleaning intensity for cleaning the exterior sensor surface 3 e.g. by increasing/decreasing the contact pressure with the positioning means 10 and/or by dispensing/not dispensing cleaning liquid to moisten the dirt 11. Dispensing the cleaning liquid facilitates removal of the dirt 11, which is converted into wet dirt 11.

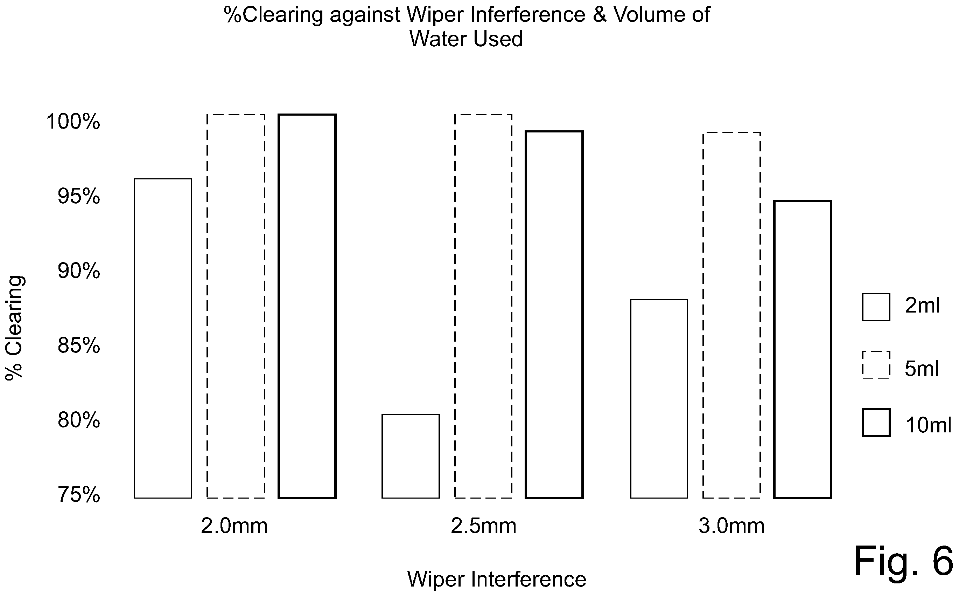

Figure 6 indicates some further effects of adjusting the cleaning intensity for cleaning the exterior sensor surface 3 based on the required cleaning intensity for cleaning the exterior sensor surface 3. The diagram of figure 6 shows a cleaning efficiency, referred to in figure 6 as "% Cleaning" for different contact pressures of the wiper element 5 against the exterior sensor surface 3. The different contact pressures result from a different positioning of the wiper element 5, which is indicated in figure 6 as "wiper interference" in millimeters. The diagram contains three columns indicating different amounts of cleaning liquid dispensed onto the exterior sensor surface 3 for each of the different "wiper interferences".

As can be seen in figure 6, cleaning efficiency is in general higher for bigger amounts of cleaning liquid dispensed towards the exterior sensor surface 3. However, increase of contact pressure does not always improve cleaning efficiency when dispensing cleaning liquid.

### List of reference numerals

- 1: sensor unit
- 2: sensor
- 3: exterior sensor surface
- 4: sensor cleaning device
- 5: wiper element
- 6: wiper rig
- 7: guide rail
- 8: slide element
- 9: shaft
- 10: positioning means
- 11: dirt
- 12: gear drive mechanism
- 13: cleaning liquid dispensing unit
- 14: air discharge unit

## Claims

1. Sensor cleaning device (4) for cleaning an exterior sensor surface (3) of a sensor (2), in particular an optical camera or a LiDAR, for use in automotive applications, comprising
- multiple wiper elements (5), and
- a wiper rig (6), which supports the multiple wiper elements (5), and which is movable to move the multiple wiper elements (5) across the exterior sensor surface (3), wherein
- the sensor cleaning device (4) is adjustable to adjust its cleaning intensity for cleaning the exterior sensor surface (3) based on a required cleaning intensity for cleaning the exterior sensor surface (3), and
- the sensor cleaning device (4) comprises positioning means (10) for positioning the multiple wiper elements (5) relative to the exterior sensor surface (3) based on a required cleaning intensity for cleaning the exterior sensor surface (3), wherein the positioning means (10) enable a movement of the multiple wiper elements (5) in a direction of a z-axis perpendicular to the exterior sensor surface (3),
wherein the sensor cleaning device (4) is **characterized in that,**
- the sensor cleaning device (4) comprises multiple positioning means (10) for individually positioning each wiper element (5) relative to the exterior sensor surface (3) based on a required cleaning intensity for cleaning the exterior sensor surface (3), and/or
- the sensor cleaning device (4) comprises positioning means (10) for commonly positioning the wiper elements (5) relative to the exterior sensor surface (3) based on a required cleaning intensity for cleaning the exterior sensor surface (3) and the wiper rig (6) comprises adjusting means for adjusting the position of the wiper elements (5) relative to the exterior sensor surface (3) and relative to each other based on the required cleaning intensity for cleaning the exterior sensor surface (3).

2. Sensor cleaning device (4) according to claim 1, **characterized in that,**
- the multiple wiper elements (5) are supported by the wiper rig (6), wherein the multiple wiper elements (5) are biased relative to each other to apply a different contact pressure against the exterior sensor surface (3).

3. Sensor cleaning device (4) according to any preceding claim, **characterized in that,**
- the sensor cleaning device (4) is controlled to position the multiple wiper elements (5) relative to the exterior sensor surface (3) via the positioning means (10) and/or the adjusting means differently for different wiping directions, and/or
- the sensor cleaning device (4) controls the positioning means (10) and/or the adjusting means to position the multiple wiper elements (5) relative to the exterior sensor surface (3) differently for different wiping directions, and/or
- the sensor cleaning device (4) comprises mechanical coupling means for automatically positioning the multiple wiper elements (5) relative to the exterior sensor surface (3) differently for different wiping directions.

4. Sensor cleaning device (4) according to any preceding claim, **characterized in that,**
- the positioning means (10) are further adapted to move the multiple wiper elements (5) between their operating position for cleaning the exterior sensor surface (3) and a maintenance position, in which the multiple wiper elements (5) are positioned away from the exterior sensor surface (3).

5. Sensor cleaning device (4) according to any preceding claim, **characterized in that,**
- the wiper rig (6) movably supports the multiple wiper elements (5) in its operating position, in particular movably in a direction perpendicular to the exterior sensor surface (3), and
- the wiper rig (6) comprises biasing means, in particular at least one spring, which bias the multiple wiper elements (5) towards the operating position.

6. Sensor cleaning device (4) according to any preceding claim, **characterized in that,**
- the multiple wiper elements (5) are provided as wiper blades and/or
- the multiple wiper elements (5) are provided as wiper brushes.

7. Sensor cleaning device (4) according to any preceding claim, **characterized in that,**
- the sensor cleaning device (4) comprises a cleaning liquid dispensing unit (13) for dispensing a cleaning liquid for adjusting its cleaning intensity for cleaning the exterior sensor surface (3) based on a required cleaning intensity for cleaning the exterior sensor surface (3).

8. Sensor cleaning device (4) according to any preceding claim, **characterized in that,**
- the sensor cleaning device (4) comprises an air discharge unit (14) for discharging compressed air for adjusting its cleaning intensity for cleaning the exterior sensor surface (3) based on a required cleaning intensity for cleaning the exterior sensor surface (3).

9. Sensor cleaning device (4) according to any preceding claim, **characterized in that,**
- the wiper rig (6) is adapted for performing an axial movement to move the multiple wiper elements (5) across the exterior sensor surface (3), in particular to move the multiple wiper elements (5) in parallel to a border of the exterior sensor surface (3).

10. Sensor cleaning device (4) according to preceding claim 9, **characterized in that,**
- the wiper rig (6) supports the multiple wiper elements (5) in a horizontal direction and moves the multiple wiper elements (5) in a vertical direction across the exterior sensor surface (3), or
- the wiper rig (6) supports the multiple wiper elements (5) in a vertical direction and moves the multiple wiper elements (5) in a horizontal direction across the exterior sensor surface (3).

11. Sensor cleaning device (4) according to any preceding claim, **characterized in that,**
- the sensor cleaning device (4) comprises a control unit, which determines the required cleaning intensity for cleaning the exterior sensor surface (3) based on at least one parameter out of
- an amount or level of dirt (11) located at the exterior sensor surface (3),
- a type of dirt (11) located at the exterior sensor surface (3),
- a location of dirt (11) at the exterior sensor surface (3),
- a duration the dirt (11) remaining at the exterior sensor surface (3),
- an ambient temperature,
- a vehicle speed,
- a cleaning liquid availability and/or
- data of previous cleaning operations.

12. Sensor cleaning device (4) according to any preceding claim, **characterized in that,**
- the sensor cleaning device (4) is adjustable to adjust its cleaning intensity for cleaning the exterior sensor surface (3) based on a required cleaning intensity for cleaning the exterior sensor surface (3) based on a location of dirt (11) at the exterior sensor surface (3).

13. Sensor cleaning device (4) according to any preceding claim, **characterized in that,**
- the wiper rig (6) comprises a gear drive mechanism (12) for moving the multiple wiper elements (5) across the exterior sensor surface (3), and/or
- the wiper rig (6) comprises a guide rail (7) and a slide element (8) for moving the multiple wiper elements (5) across the exterior sensor surface (3).

14. Sensor cleaning device (4) according to any preceding claim, **characterized in that,**
- the sensor cleaning device (4) is adjustable to adjust its cleaning intensity for cleaning the exterior sensor surface (3) based on a required cleaning intensity for cleaning the exterior sensor surface (3) by adjusting a wiping frequency, and/or
- the sensor cleaning device (4) is adjustable to adjust its cleaning intensity for cleaning the exterior sensor surface (3) based on a required cleaning intensity for cleaning the exterior sensor surface (3) by adjusting a wiping velocity, and/or
- the sensor cleaning device (4) is adjustable to adjust its cleaning intensity for cleaning the exterior sensor surface (3) based on a required cleaning intensity for cleaning the exterior sensor surface (3) by adjusting a wiping interval length.

15. Sensor cleaning device (4) according to any preceding claim, **characterized in that,**
- the sensor cleaning device (4) is adjustable to adjust its cleaning intensity for cleaning the exterior sensor surface (3) based on a required cleaning intensity for cleaning the exterior sensor surface (3) by moving the multiple wiper elements (5) individually or in groups between a cleaning position, in which the respective wiper element (s) (5) is/are movable across the exterior sensor surface (3), and a retracted position, in which the respective wiper element(s) (5) is/are not in contact with the exterior sensor surface (3).

16. Sensor unit (1) comprising a sensor (2) with an exterior sensor surface (3), in particular an optical camera or a LiDAR, for use in automotive applications and a sensor cleaning device (4) of any of claims 1 to 15.

## Patentansprüche

1. Sensorreinigungsvorrichtung (4) zum Reinigen einer äußeren Sensoroberfläche (3) eines Sensors (2), insbesondere einer optischen Kamera oder eines LiDAR, zur Verwendung in Automobilanwendungen, umfassend
- mehrere Wischerelemente (5) und
- eine Wischereinrichtung (6), die die mehreren Wischerelemente (5) stützt und die bewegbar ist, um die mehreren Wischerelemente (5) über die äußere Sensoroberfläche (3) zu bewegen, wobei
- die Sensorreinigungsvorrichtung (4) einstellbar ist, um ihre Reinigungsintensität zum Reinigen der äußeren Sensoroberfläche (3) basierend auf einer erforderlichen Reinigungsintensität zum Reinigen der äußeren Sensoroberfläche (3) einzustellen, und
- die Sensorreinigungsvorrichtung (4) Positionierungsmittel (10) zum Positionieren der mehreren Wischerelemente (5) relativ zu der äußeren Sensoroberfläche (3) basierend auf einer erforderlichen Reinigungsintensität zum Reinigen der äußeren Sensoroberfläche (3) umfasst, wobei die Positionierungsmittel (10) eine Bewegung der mehreren Wischerelemente (5) in einer Richtung einer Achse senkrecht zu der äußeren Sensoroberfläche (3) ermöglichen, wobei die Sensorreinigungsvorrichtung (4) **dadurch gekennzeichnet ist, dass**
- die Sensorreinigungsvorrichtung (4) mehrere Positionierungsmittel (10) zum individuellen Positionieren jedes Wischerelements (5) relativ zu der äußeren Sensoroberfläche (3) basierend auf einer erforderlichen Reinigungsintensität zum Reinigen der äußeren Sensoroberfläche (3) umfasst, und/oder
- die Sensorreinigungsvorrichtung (4) Positionierungsmittel (10) zum gemeinsamen Positionieren der Wischerelemente (5) relativ zu der äußeren Sensoroberfläche (3) basierend auf einer erforderlichen Reinigungsintensität zum Reinigen der äußeren Sensoroberfläche (3) umfasst und die Wischereinrichtung (6) Einstellmittel zum Einstellen der Position der Wischerelemente (5) relativ zu der äußeren Sensoroberfläche (3) und relativ zueinander basierend auf der erforderlichen Reinigungsintensität zum Reinigen der äußeren Sensoroberfläche (3) umfasst.

2. Sensorreinigungsvorrichtung (4) nach Anspruch 1,
**dadurch gekennzeichnet, dass**
- die mehreren Wischerelemente (5) durch die Wischereinrichtung (6) gestützt werden, wobei die mehreren Wischerelemente (5) relativ zueinander vorgespannt sind, um einen unterschiedlichen Kontaktdruck gegen die äußere Sensoroberfläche (3) auszuüben.

3. Sensorreinigungsvorrichtung (4) nach einem der vorstehenden Ansprüche,
**dadurch gekennzeichnet, dass**
- die Sensorreinigungsvorrichtung (4) gesteuert wird, um die mehreren Wischerelemente (5) relativ zu der äußeren Sensoroberfläche (3) mithilfe der Positionierungsmittel (10) und/oder der Einstellmittel für unterschiedliche Wischrichtungen unterschiedlich zu positionieren, und/oder
- die Sensorreinigungsvorrichtung (4) die Positionierungsmittel (10) und/oder die Einstellmittel steuert, um die mehreren Wischerelemente (5) relativ zu der äußeren Sensoroberfläche (3) für unterschiedliche Wischrichtungen unterschiedlich zu positionieren, und/oder
- die Sensorreinigungsvorrichtung (4) mechanische Kopplungsmittel zum unterschiedlichen automatischen Positionieren der mehreren Wischerelemente (5) relativ zu der äußeren Sensoroberfläche (3) für unterschiedliche Wischrichtungen umfasst.

4. Sensorreinigungsvorrichtung (4) nach einem der vorstehenden Ansprüche,
**dadurch gekennzeichnet, dass**
- die Positionierungsmittel (10) ferner angepasst sind, um die mehreren Wischerelemente (5) zwischen ihrer Betriebsposition zum Reinigen der äußeren Sensoroberfläche (3) und einer Wartungsposition zu bewegen, in der die mehreren Wischerelemente (5) von der äußeren Sensoroberfläche (3) entfernt positioniert sind.

5. Sensorreinigungsvorrichtung (4) nach einem der vorstehenden Ansprüche, **dadurch gekennzeichnet, dass**
- die Wischereinrichtung (6) die mehreren Wischerelemente (5) in ihrer Betriebsposition bewegbar, insbesondere bewegbar in einer Richtung senkrecht zu der äußeren Sensoroberfläche (3), stützt und
- die Wischereinrichtung (6) Vorspannmittel, insbesondere mindestens eine Feder, umfasst, die die mehreren Wischerelemente (5) zu der Betriebsposition hin vorspannen.

6. Sensorreinigungsvorrichtung (4) nach einem der vorstehenden Ansprüche,
**dadurch gekennzeichnet, dass**
- die mehreren Wischerelemente (5) als Wischerblätter bereitgestellt sind und/oder
- die mehreren Wischerelemente (5) als Wischerbürsten bereitgestellt sind.

7. Sensorreinigungsvorrichtung (4) nach einem der vorstehenden Ansprüche,
**dadurch gekennzeichnet, dass**
- die Sensorreinigungsvorrichtung (4) eine Reinigungsflüssigkeitsabgabeeinheit (13) zum Abgeben einer Reinigungsflüssigkeit zum Einstellen ihrer Reinigungsintensität zum Reinigen der äußeren Sensoroberfläche (3) basierend auf einer erforderlichen Reinigungsintensität zum Reinigen der äußeren Sensoroberfläche (3) umfasst.

8. Sensorreinigungsvorrichtung (4) nach einem der vorstehenden Ansprüche,
**dadurch gekennzeichnet, dass**
- die Sensorreinigungsvorrichtung (4) eine Luftauslasseinheit (14) zum Auslassen von Druckluft zum Einstellen ihrer Reinigungsintensität zum Reinigen der äußeren Sensoroberfläche (3) basierend auf einer erforderlichen Reinigungsintensität zum Reinigen der äußeren Sensoroberfläche (3) umfasst.

9. Sensorreinigungsvorrichtung (4) nach einem der vorstehenden Ansprüche,
**dadurch gekennzeichnet, dass**
- die Wischereinrichtung (6) zum Ausführen einer axialen Bewegung angepasst ist, um die mehreren Wischerelemente (5) über die äußere Sensoroberfläche (3) zu bewegen, insbesondere um die mehreren Wischerelemente (5) parallel zu einem Rand der äußeren Sensoroberfläche (3) zu bewegen.

10. Sensorreinigungsvorrichtung (4) nach dem vorstehenden Anspruch 9,
**dadurch gekennzeichnet, dass**
- die Wischereinrichtung (6) die mehreren Wischerelemente (5) in einer horizontalen Richtung stützt und die mehreren Wischerelemente (5) in einer vertikalen Richtung über die äußere Sensoroberfläche (3) bewegt oder
- die Wischereinrichtung (6) die mehreren Wischerelemente (5) in einer vertikalen Richtung stützt und die mehreren Wischerelemente (5) in einer horizontalen Richtung über die äußere Sensoroberfläche (3) bewegt.

11. Sensorreinigungsvorrichtung (4) nach einem der vorstehenden Ansprüche,
**dadurch gekennzeichnet, dass**
- die Sensorreinigungsvorrichtung (4) eine Steuereinheit umfasst, die die erforderliche Reinigungsintensität zum Reinigen der äußeren Sensoroberfläche (3) bestimmt, basierend auf mindestens einem Parameter aus
- einer Menge oder eines Grads einer Verschmutzung (11), die sich an der äußeren Sensoroberfläche (3) befindet,
- einer Art der Verschmutzung (11), die sich an der äußeren Sensoroberfläche (3) befindet,
- einer Stelle der Verschmutzung (11) an der äußeren Sensoroberfläche,
- einer Dauer, mit der die Verschmutzung (11) an der äußeren Sensoroberfläche (3) verbleibt,
- einer Umgebungstemperatur,
- einer Fahrzeuggeschwindigkeit,
- einer Reinigungsflüssigkeitsverfügbarkeit und/oder
- Daten vorheriger Reinigungsbetriebe.

12. Sensorreinigungsvorrichtung (4) nach einem der vorstehenden Ansprüche,
**dadurch gekennzeichnet, dass**
- die Sensorreinigungsvorrichtung (4) einstellbar ist, um ihre Reinigungsintensität zum Reinigen der äußeren Sensoroberfläche (3) basierend auf einer erforderlichen Reinigungsintensität zum Reinigen der äußeren Sensoroberfläche (3) basierend auf einer Stelle der Verschmutzung (11) an der äußeren Sensoroberfläche (3) einzustellen.

13. Sensorreinigungsvorrichtung (4) nach einem der vorstehenden Ansprüche,
**dadurch gekennzeichnet, dass**
- die Wischereinrichtung (6) einen Zahnradantriebsmechanismus (12) zum Bewegen der mehreren Wischerelemente (5) über die äußere Sensoroberfläche (3) umfasst und/oder
- die Wischereinrichtung (6) eine Führungsschiene (7) und ein Gleitelement (8) zum Bewegen der mehreren Wischerelemente (5) über die äußere Sensoroberfläche (3) umfasst.

14. Sensorreinigungsvorrichtung (4) nach einem der vorstehenden Ansprüche,
**dadurch gekennzeichnet, dass**
- die Sensorreinigungsvorrichtung (4) einstellbar ist, um ihre Reinigungsintensität zum Reinigen der äußeren Sensoroberfläche (3) basierend auf einer erforderlichen Reinigungsintensität zum Reinigen der äußeren Sensoroberfläche (3) durch Einstellen einer Wischfrequenz einzustellen, und/oder
- die Sensorreinigungsvorrichtung (4) einstellbar ist, um ihre Reinigungsintensität zum Reinigen der äußeren Sensoroberfläche (3) basierend auf einer erforderlichen Reinigungsintensität zum Reinigen der äußeren Sensoroberfläche (3) durch Einstellen einer Wischgeschwindigkeit einzustellen, und/oder
- die Sensorreinigungsvorrichtung (4) einstellbar ist, um ihre Reinigungsintensität zum Reinigen der äußeren Sensoroberfläche (3) basierend auf einer erforderlichen Reinigungsintensität zum Reinigen der äußeren Sensoroberfläche (3) durch Einstellen einer Wischintervalllänge einzustellen.

15. Sensorreinigungsvorrichtung (4) nach einem der vorstehenden Ansprüche,
**dadurch gekennzeichnet, dass**
- die Sensorreinigungsvorrichtung (4) einstellbar ist, um ihre Reinigungsintensität zum Reinigen der äußeren Sensoroberfläche (3) basierend auf einer erforderlichen Reinigungsintensität zum Reinigen der äußeren Sensoroberfläche (3) durch individuelles oder gruppenweises Bewegen der mehreren Wischerelemente (5) zwischen einer Reinigungsposition, in der das/die jeweilige(n) Wischerelement(e) (5) über die äußere Sensoroberfläche (3) bewegbar ist/sind, und einer zurückgezogenen Position einzustellen, in der das/die jeweilige(n) Wischerelement(e) (5) nicht in Kontakt mit der äußeren Sensoroberfläche (3) ist/sind.

16. Sensoreinheit (1), umfassend einen Sensor (2) mit einer äußeren Sensoroberfläche (3), insbesondere eine optische Kamera oder ein LiDAR, zur Verwendung in Automobilanwendungen und eine Sensorreinigungsvorrichtung (4) nach einem der Ansprüche 1 bis 15.

## Revendications

1. Dispositif de nettoyage de capteur (4) permettant de nettoyer une surface de capteur extérieure (3) d'un capteur (2), en particulier une caméra optique ou un LiDAR, destiné à être utilisé dans des applications automobiles, comprenant
- de multiples éléments racloirs (5), et
- un support de racloir (6), qui supporte les multiples éléments racloirs (5), et qui est mobile pour déplacer les multiples éléments racloirs (5) sur l'ensemble de la surface de capteur extérieure (3), dans lequel
le dispositif de nettoyage de capteur (4) est ajustable pour ajuster son intensité de nettoyage pour nettoyer la surface de capteur extérieure (3) en fonction d'une intensité de nettoyage requise pour nettoyer la surface de capteur extérieure (3), et
le dispositif de nettoyage de capteur (4) comprend des moyens de positionnement (10) pour positionner les multiples éléments racloirs (5) par rapport à la surface de capteur extérieure (3) en fonction d'une intensité de nettoyage requise pour nettoyer la surface de capteur extérieure (3), dans lequel les moyens de positionnement (10) permettent un mouvement des multiples éléments racloirs (5) dans une direction d'un axe perpendiculaire à la surface de capteur extérieure (3), dans lequel le dispositif de nettoyage de capteur (4) est
**caractérisé en ce que,**
le dispositif de nettoyage de capteur (4) comprend de multiples moyens de positionnement (10) pour positionner individuellement chaque élément racloir (5) par rapport à la surface de capteur extérieure (3) en fonction d'une intensité de nettoyage requise pour nettoyer la surface de capteur extérieure (3), et/ou
le dispositif de nettoyage de capteur (4) comprend des moyens de positionnement (10) pour positionner communément les éléments racloirs (5) par rapport à la surface de capteur extérieure (3) en fonction d'une intensité de nettoyage requise pour nettoyer la surface de capteur extérieure (3) et le support de racloir (6) comprend des moyens d'ajustement pour ajuster la position des éléments racloirs (5) par rapport à la surface de capteur extérieure (3) et l'un par rapport à l'autre en fonction de l'intensité de nettoyage requise pour nettoyer la surface de capteur extérieure (3).

2. Dispositif de nettoyage de capteur (4) selon la revendication 1,
**caractérisé en ce que,**
- les multiples éléments racloirs (5) sont supportés par le support de racloir (6), dans lequel les multiples éléments racloirs (5) sont sollicités les uns par rapport aux autres pour appliquer une pression de contact différente contre la surface de capteur extérieure (3).

3. Dispositif de nettoyage de capteur (4) selon l'une quelconque revendication précédente,
**caractérisé en ce que,**
- le dispositif de nettoyage de capteur (4) est commandé pour positionner les multiples éléments racloirs (5) par rapport à la surface de capteur extérieure (3) par le biais des moyens de positionnement (10) et/ou des moyens d'ajustement différemment pour différentes directions de raclage, et/ou
- le dispositif de nettoyage de capteur (4) commande les moyens de positionnement (10) et/ou les moyens d'ajustement pour positionner les multiples éléments racloirs (5) par rapport à la surface de capteur extérieure (3) différemment pour différentes directions de raclage, et/ou
- le dispositif de nettoyage de capteur (4) comprend des moyens d'accouplement mécanique pour positionner automatiquement les multiples éléments racloirs (5) par rapport à la surface de capteur extérieure (3) différemment pour différentes directions de raclage.

4. Dispositif de nettoyage de capteur (4) selon l'une quelconque revendication précédente,
**caractérisé en ce que,**
- les moyens de positionnement (10) sont en outre adaptés à déplacer les multiples éléments racloirs (5) entre leur position de fonctionnement pour nettoyer la surface de capteur extérieure (3) et une position de maintenance, dans laquelle les multiples éléments racloirs (5) sont positionnés à l'écart de la surface de capteur extérieure (3).

5. Dispositif de nettoyage de capteur (4) selon l'une quelconque revendication précédente, **caractérisé en ce que,**
- le support de racloir (6) supporte de manière mobile les multiples éléments racloirs (5) dans leur position de fonctionnement, en particulier de manière mobile dans une direction perpendiculaire à la surface de capteur extérieure (3), et
- le support de racloir (6) comprend des moyens de sollicitation, en particulier au moins un ressort, qui sollicitent les multiples éléments racloirs (5) vers la position de fonctionnement.

6. Dispositif de nettoyage de capteur (4) selon l'une quelconque revendication précédente,
**caractérisé en ce que,**
- les multiples éléments racloirs (5) sont fournis sous forme de lames de racloir et/ou
- les multiples éléments racloirs (5) sont fournis sous forme de brosses de racloir.

7. Dispositif de nettoyage de capteur (4) selon l'une quelconque revendication précédente,
**caractérisé en ce que,**
- le dispositif de nettoyage de capteur (4) comprend une unité de distribution de liquide de nettoyage (13) pour distribuer un liquide de nettoyage afin d'ajuster son intensité de nettoyage pour nettoyer la surface de capteur extérieure (3) en fonction d'une intensité de nettoyage requise pour nettoyer la surface de capteur extérieure (3).

8. Dispositif de nettoyage de capteur (4) selon l'une quelconque revendication précédente,
**caractérisé en ce que,**
- le dispositif de nettoyage de capteur (4) comprend une unité d'évacuation d'air (14) pour évacuer l'air comprimé afin d'ajuster son intensité de nettoyage pour nettoyer la surface de capteur extérieure (3) en fonction d'une intensité de nettoyage requise pour nettoyer la surface de capteur extérieure (3).

9. Dispositif de nettoyage de capteur (4) selon l'une quelconque revendication précédente,
**caractérisé en ce que,**
- le support de racloir (6) est adapté à effectuer un mouvement axial afin de déplacer les multiples éléments racloirs (5) sur l'ensemble de la surface de capteur extérieure (3), en particulier pour déplacer les multiples éléments racloirs (5) parallèlement à un bord de la surface de capteur extérieure (3).

10. Dispositif de nettoyage de capteur (4) selon la revendication précédente 9,
**caractérisé en ce que,**
- le support de racloir (6) supporte les multiples éléments racloirs (5) dans une direction horizontale et déplace les multiples éléments racloirs (5) dans une direction verticale sur l'ensemble de la surface de capteur extérieure (3), ou
- le support de racloir (6) supporte les multiples éléments racloirs (5) dans une direction verticale et déplace les multiples éléments racloirs (5) dans une direction horizontale sur l'ensemble de la surface de capteur extérieure (3).

11. Dispositif de nettoyage de capteur (4) selon l'une quelconque revendication précédente,
**caractérisé en ce que,**
- le dispositif de nettoyage de capteur (4) comprend une unité de commande qui détermine l'intensité de nettoyage requise pour nettoyer la surface de capteur extérieure (3) en fonction d'au moins un paramètre parmi
- une quantité ou un niveau de saleté (11) situé au niveau de la surface de capteur extérieure (3),
- un type de saleté (11) situé au niveau de la surface de capteur extérieure (3),
- un emplacement de la saleté (11) au niveau de la surface de capteur extérieure, une durée pendant laquelle la saleté (11) reste au niveau de la surface de capteur extérieure (3),
- une température ambiante,
- une vitesse de véhicule,
- une disponibilité de liquide de nettoyage et/ou
- des données relatives aux opérations de nettoyage précédentes.

12. Dispositif de nettoyage de capteur (4) selon l'une quelconque revendication précédente,
**caractérisé en ce que,**
- le dispositif de nettoyage de capteur (4) est ajustable pour ajuster son intensité de nettoyage pour nettoyer la surface de capteur extérieure (3) en fonction d'une intensité de nettoyage requise pour nettoyer la surface de capteur extérieure (3) en fonction d'un emplacement de la saleté (11) au niveau de la surface de capteur extérieure (3).

13. Dispositif de nettoyage de capteur (4) selon l'une quelconque revendication précédente,
**caractérisé en ce que,**
- le support de racloir (6) comprend un mécanisme d'entraînement par engrenage (12) pour déplacer les multiples éléments racloirs (5) sur l'ensemble de la surface de capteur extérieure (3), et/ou
- le support de racloir (6) comprend un rail de guidage (7) et un élément coulissant (8) pour déplacer les multiples éléments racloirs (5) sur l'ensemble de la surface de capteur extérieure (3)

14. Dispositif de nettoyage de capteur (4) selon l'une quelconque revendication précédente,
**caractérisé en ce que,**
- le dispositif de nettoyage de capteur (4) est ajustable pour ajuster son intensité de nettoyage pour nettoyer la surface de capteur extérieure (3) en fonction d'une intensité de nettoyage requise pour nettoyer la surface de capteur extérieure (3) en ajustant une fréquence de raclage, et/ou
- le dispositif de nettoyage de capteur (4) est ajustable pour ajuster son intensité de nettoyage pour nettoyer la surface de capteur extérieure (3) en fonction d'une intensité de nettoyage requise pour nettoyer la surface de capteur extérieure (3) en ajustant une vitesse de raclage, et/ou
- le dispositif de nettoyage de capteur (4) est ajustable pour ajuster son intensité de nettoyage pour nettoyer la surface de capteur extérieure (3) en fonction d'une intensité de nettoyage requise pour nettoyer la surface de capteur extérieure (3) en ajustant une longueur d'intervalle de raclage.

15. Dispositif de nettoyage de capteur (4) selon l'une quelconque revendication précédente,
**caractérisé en ce que,**
- le dispositif de nettoyage de capteur (4) est ajustable pour ajuster son intensité de nettoyage pour nettoyer la surface de capteur extérieure (3) en fonction d'une intensité de nettoyage requise pour nettoyer la surface de capteur extérieure (3) en déplaçant les multiples éléments racloirs (5) individuellement ou en groupes entre une position de nettoyage, dans laquelle le ou les éléments racloirs (5) respectifs sont mobiles sur l'ensemble de la surface de capteur extérieure (3), et une position rétractée, dans laquelle le ou les éléments racloirs (5) respectifs ne sont pas en contact avec la surface de capteur extérieure (3).

16. Unité de capteur (1) comprenant un capteur (2) avec une surface de capteur extérieure (3), en particulier une caméra optique ou un LiDAR, destinée à être utilisée dans des applications automobiles et un dispositif de nettoyage de capteur (4) selon l'une quelconque des revendications 1 à 15.
